## Europäisches Patentamt
## European Patent Office
## Office européen des brevets

(11) Publication number: **0 050 340**
**B2**

(12) NEW EUROPEAN PATENT SPECIFICATION

(45) Date of publication of the new patent specification: **16.01.91**

(51) Int. Cl.⁵: **F 01 N 3/02, B 28 B 1/50**

(21) Application number: **81108450.8**

(22) Date of filing: **16.10.81**

(54) **Exhaust filter device for collecting particulates in engine exhaust gases and method for its manufacture.**

(30) Priority: **17.10.80 JP 145200/80**
**19.05.81 JP 75501/81**
**19.05.81 JP 72154/81 u**
**19.05.81 JP 72155/81 u**

(43) Date of publication of application:
**28.04.82 Bulletin 82/17**

(45) Publication of the grant of the patent:
**26.02.86 Bulletin 86/09**

(45) Mention of the opposition decision:
**16.01.91 Bulletin 91/03**

(84) Designated Contracting States:
**DE FR GB SE**

(56) References cited:
| | |
|---|---|
| DE-A-2 441 633 | US-A-3 090 094 |
| DE-A-2 942 042 | US-A-3 916 057 |
| DE-U-7 228 467 | US-A-3 920 428 |
| GB-A-2 007 994 | US-A-4 106 913 |
| GB-A-2 010 711 | US-A-4 158 037 |
| GB-A-2 027 688 | US-A-4 264 346 |
| GB-A-2 062 609 | |

(73) Proprietor: **BRIDGESTONE TIRE COMPANY LIMITED**
**10-1, Kyobashi 1-Chome Chuo-Ku**
**Tokyo (JP)**

(72) Inventor: **Narumiya, Tsuneaki**
**No. 2-6-8, Housen-cho Hodogaya-ku**
**Yokohama-shi Kanagawa-ken (JP)**

(74) Representative: **TER MEER - MÜLLER - STEINMEISTER & PARTNER**
**Mauerkircherstrasse 45**
**D-8000 München 80 (DE)**

Courier Press, Leamington Spa, England.

## Description

### Background of the Invention

This invention relates to an exhaust filter device for collecting particulates in exhaust gases from an engine, comprising a housing enclosing an element for collecting said particulates, said element being tightly retained in said housing, and a method for its manufacture.

In recent years, great considerations have been made from a standpoint of reducing pollution on the exhaust gases of Diesel engines, which contain particulates of soot, benzopyrene and the like. Particularly in the USA, the regulation on the amount of particulates in exhaust gases of automobile Diesel engines is to be put in force from 1985.

In the prior art, ceramic bodies of a modified honeycomb structure and sponge-like shapes of metallic wires were proposed as means for collecting such particulates. The honeycomb structured ceramic bodies, however, have the disadvantage that particulate collection percentage cannot be suitably adjusted because of the wall flow behavior of the honeycomb structure. Since the majority of particulates in the Diesel engine exhaust gases have an average diameter of less than 1 micron, the wall flow type ceramic honeycomb structure has another disadvantage that such fine particules would block voids in the wall of the honeycomb structure to rapidly raise the pressure loss across the structure. On the other hand, the sponge-like shapes of metallic wires tend to be deteriorated and in some cases, melted by the large build-up of heat resulting from the oxidation treatment of the particulates collected in the sponge for the regeneration of the metallic wire sponges. The metallic wire sponges have many problems that the mounting location is limited because of low heat resistance, that the particulates collected are difficult to oxidize and remove, and that they are not sufficiently resistant against corrosion by a small amount of acidic components contained in exhaust gases.

The honeycomb ceramic bodies and the metallic wire sponges are not necessarily successful in collecting particulates in exhaust gases of engines, particularly Diesel engines and removing or oxidizing the collected particulates.

GB—A—2 027 688 discloses a ceramic porous body usable as a filtering material for molten metal having a three-dimensional cellular structure with a plurality of interconnected voids, a pore size of 25—35 pores per linear centimeter in optional cut area, a bulk specific gravity of 0.3—0.7, a porosity of 75—90% and a pressure loss of 4.8—30.0 mm as a water-gauge pressure when passing air through such a body of 1 cm thickness at a rate of 1 m/sec. No reference is made in this document to other fields of use of the ceramic porous body described.

GB—A—2 007 994 describes a filter for use in an automotive exhaust system to remove particulate carbon and/or other solids from hot exhaust gas including a metal casing enclosing a mass or wire wool or wire mesh whose periphery is bonded to the casing wall to support the mass under high temperature operation. The bonding is achieved by sintering under a hydrogen atmosphere, which also results in some bonding with the mass itself. The mass may be coated with alumina and a catalyst.

US—A—4 158 037 describes a catalytic converter of the cassette type having a monolithic honeycomb structure of catalyst-coated ceramic body which is resiliently supported within an outer cylindrical metal shell.

US—A—3 090 094 discloses a method for making porous ceramic articles by immersing an open-celled element of spongy material in a slurry containing a ceramic coating material to coat cell-defining walls of said element, removing excess slurry from said element, and firing said element to remove the spongy material and form a hardened structure of porous ceramic. At least ceramic articles may be used as heat-resistant filters for molten matter, as heat-resistant catalyst supports employed in the combustion of exhaust gases and in other applications.

DE—A—24 41 633 describes a flexible ceramic sheet comprising 30 to 85 percent by weight of expandable mica, 0 to 60 percent by weight of an inorganic fiber material and 70 to 10 percent by weight of an inorganic binder, which optionally is provided on a re-enforcing support made of Kraftpaper, a plastic foil or a mineral fiber cloth. This material may be used for fixing a ceramic body in a metal container, specifically a catalyst in an exhaust gas purification system of internal combustion engines.

DE-Utility Model 72 28 467 discloses an apparatus for the purification of the exhaust gases of internal combustion engines comprising a filter package made of steel, stone or glass wool. The filter package may comprise three different zones having decreasing pore sizes.

DE—A—29 42 042 discloses a porous ceramic body of a three-dimensional reticular structure having a bulk specific gravity of 0.25 to 0.55.

### Summary of the Invention

An object of the present invention is to provide an improved exhaust filter device for effectively collecting particulates in high-temperature exhaust gases from engines, particularly Diesel engines and removing or oxidizing the collected particulates, as well as having improved heat and corrosion resistance.

Briefly stated, the present invention relates to an exhaust filter device for collecting particulates in exhaust gases from an engine, comprising a housing enclosing an element for collecting said particulates said element being tightly retained in said housing and which is chararacterized in that it comprises at least one porous ceramic body of a three-dimensional reticulate structure having 5—150 interconnected open cells per 2.54 cm and having a bulk specific gravity of 0.25—0.5 and is tightly encircled by

a) a flexible ceramic sheet, leaving openings at the opposed ends of said body to form an inlet and an outlet for the passage of exhaust gases, said ceramic sheet containing a component expandable upon heating and being compressed at 5—60% deflection by said housing and

b) a cover leaving openings at the opposed ends of said body to form an inlet and an outlet for the passage of exhaust gases, said cover being formed from at least one member selected from heat resistant long carbon fibers and woven and non-woven fabrics thereof.

This exhaust filter device is located in the path of exhaust gases such that the exhaust gases flow through the interconnected open cells.

The requirements for particulate collecting elements for use with Diesel engines are the efficiency of collecting particulates and the easiness of disposal of collected particulates.

The majority of particulates in exhaust gases from Diesel engines have a diameter of less than 1 micron. It is impractical to filter off such fine particulates by means of a fine mesh filter through a surface filtering mechanism, because a large pressure loss develops across the filter and the load due to clogging increases in an early stage. A typical attempt to eliminate such shortcomings is to use an extrusion molded ceramic honeycomb in which small and large bores are alternately arranged. In the ceramic honeycomb, particulates are caught by the internal side walls of the honeycomb, and hence are filtered off through an internal filtering mechanism. However, since the filtering mechanism of ceramic honeycomb structure is that exhaust gases pass through fine pores along the biscuit-like internal side walls thereof to collect or catch particulates in the exhaust gases to the internal side walls, many problems are encountered including the narrow range over which the collecting efficiency can be controlled and the early clogging of pores by particulates.

Since the particulate collecting element according to the present invention is of a reticulate structure consisting of strands defining open cells, the exhaust gas flow impinges against the strands and changes its flow direction many times before it passes the element. During this process, particulates in the exhaust gas flow readily adhere to the strands of the element, resulting in effective collection.

The other requirement of the particulate collecting element is to regenerate the element by removing the collected particulates through oxidation. Such oxidation should be carried out at a temperature of higher than 400°C even in the presence of a catalyst, with the usual treating temperature exceeding 500°C. Because of the ceramic quality, the particulate collecting element according to the present invention is not only resistant to corrosion at such elevated temperatures, but also resistant to heat and thermal shock caused by the flashover of the collected particulates.

In a preferred embodiment of the present invention, at least two series-connected porous ceramic bodies are provided which are of a three-dimensional reticulate structure having 6—150 interconnected open cells per 2.54 cm and have a bulk specific gravity of 0.25—0.5. The coarser porous ceramic body having a smaller number of open cells is located upstream of the denser porous ceramic body having a larger number of open cells in the path of exhaust gases so that the exhaust gases flow through the coarser body and then the denser body. Preferably said coarser porous ceramic body located at the inlet side of the element comprises a porous ceramic body having 6—50 interconnected open cells per 2.54 cm and said denser porous ceramic body located at the outlet side comprises a porous ceramic body having 20—150 interconnected open cells per 2.54 cm. Three or more porous ceramic bodies may be provided in series in the path of exhaust gases with the coarser one being upstream of the denser one. As the effective collection of particulates with a reduced pressure loss is an important factor for the element to collect particulates in exhaust gases from Diesel engines, these preferred embodiments are advantageous. Since the coarser porous ceramic body having a relatively small number of open cells and the denser porous ceramic body having a relatively large number of open cells are located at the inlet and outlet of the element according to the preferred embodiment, relatively large particulates are collected in the upstream coarser ceramic body and relatively small particulates are collected in the downstream denser ceramic body. This arrangement minimizes the occurrence of clogging and the increase of pressure loss.

In one of the embodiments of the present invention, the above-mentioned single porous ceramic body or stack of series-connected porous ceramic bodies is encircled by a flexible ceramic sheet so as to leave openings at the opposed ends of the ceramic body or stack to form an inlet and an outlet for the passage of exhaust gases. The ceramic sheet contains a component expandable upon heating and the ceramic body is wound with the ceramic sheet preferably to a thickness of 1—20 mm. The assembly of the ceramic body enclosed in the ceramic sheet is canned in a housing so as to compress the ceramic sheet at 5—50% deflection. The assembly is heated to allow the ceramic sheet to expand, thereby tightly retaining the porous ceramic body within the housing. This arrangement can absorb errors in dimensions of a porous ceramic body occurring during manufacture. Since the ceramic sheet is expanded by heating, the ceramic sheet is brought in contact with the ceramic body to render the periphery of the ceramic body air tight, thereby allowing the assembly to be canned with ease. When subjected to thermal shock, the ceramic body having the ceramic sheet thereon undergoes a reduced thermal stress at the interface because the assembly allows slip to occur between the porous ceramic body and the ceramic sheet. The assembly exhibits a considerably improved resistance to thermal shock.

In the further embodiment of the present invention, the above-mentioned single porous ceramic body or stack of series-connected porous ceramic bodies is tightly encircled by a cover to leave openings at the opposed ends of the ceramic body or stack to form an inlet and an outlet for the passage of exhaust gases. The cover is formed by winding heat resistant long fibers of carbon or woven or non-woven fabric thereof around the ceramic body preferably to a thickness of 1—20 mm. The above-mentioned ceramic sheet may be further wound on the cover if desired. The assembly of the porous ceramic body, the cover and optionally the ceramic sheet is canned in a housing. This arrangement can also absorb errors in dimensions of a porous ceramic body occurring during manufacture, seal the periphery of the porous ceramic body in an air-tight manner, and tightly retain the porous ceramic body within the housing without allowing free movement. The canning of the assembly in the housing is easy to carry out. In addition, the element exhibits a considerably improved resistance to thermal shock.

Brief Description of the Drawings

The above and other objects, features and advantages of the present invention will be more readily understood by referring to the following description in conjunction with the accompanying drawings in which;

Fig. 1 is an enlarged perspective view of part of a porous ceramic body constituting the particulate collecting element of the exhaust filter device according to the present invention;

Figs. 2, 3 and 4 are perspective views illustrating different embodiments of the porous ceramic body used according to the present invention respectively;

Figs. 5 and 6 are cross-sectional views of different embodiments of the particulate collecting element comprising two and three series-connected porous ceramic bodies, respectively; and

Fig. 7 is cross-sectional view of the exhaust filter device of the present invention.

Description of the Preferred Embodiments

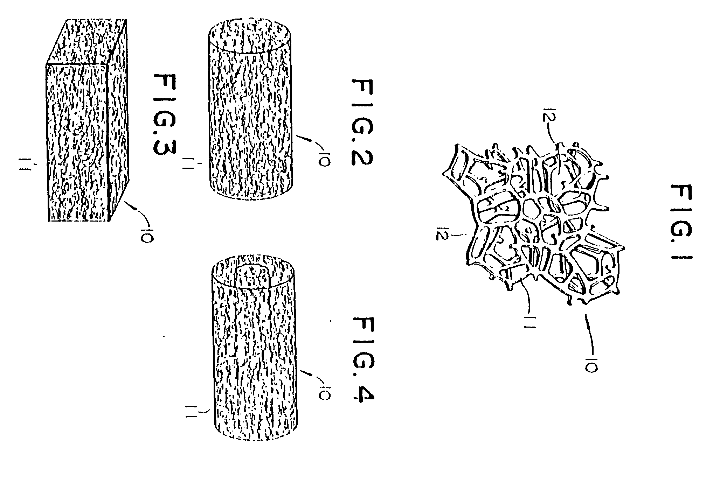

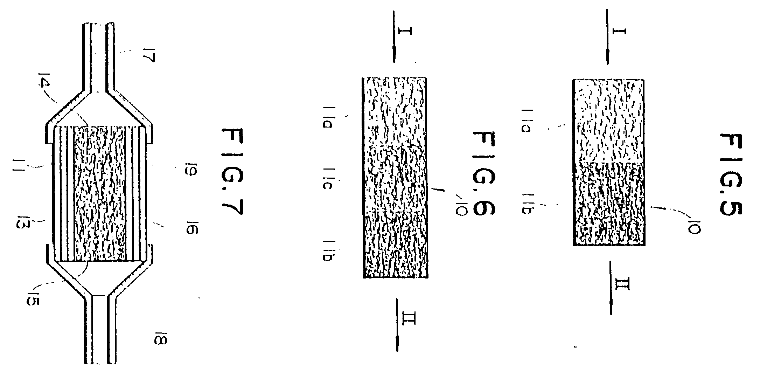

Referring to Figs. 1 to 4, the particulate collecting element used in the exhaust filter device according to the present invention is designated at 10. The element comprises a porous ceramic body part of which is illustrated in Fig. 1 at 11 as a three-dimensional reticulate structure having a number of interconnected open cells 12. These open cells are defined by interconnected strands and characterized by the absence of a cell membrane. The interconnected open cells 12 constitute a passage for exhaust gases from engines. Differently stated, the exhaust gases flow through the interconnected open cells 12. The particulate collecting element 10 of the present invention may take the form of a cylindrical body as shown in Fig. 2, a rectangular body as shown in Fig. 3, or hollow tubular body as shown in Fig. 4. The element is not limited to a cylindrical, rectangular or tubular form, and may take any other suitable shape depending on the configuration of the portion of the path of exhaust gases at which the element is to be mounted.

The porous ceramic body from which the particulate collecting element is formed should have 6 to 150 interconnected open cells per 2.54 cm. The object of the present invention is not fully attained with porous ceramic bodies having less than 6 open cells per 2.54 cm because they tend to allow the exhaust gases to pass therethrough without depositing particulates, the internal filtering effect is not exerted to a full extent, and fine particulates are not collected. On the other hand, porous ceramic bodies having more than 150 open cells per 2.54 cm exhibit an extremely increased pressure loss and particularly, they are not suitable in vibrating applications as mounting on automobiles because such ceramic bodies are reduced in strength. In the case of the particulate collecting element comprising a single porous ceramic body, use is preferably made of porous ceramic bodies having 9—34 open cells per 2.54 cm, while those porous ceramic bodies having 35—80 open cells are preferably used when the associated engine is of great displacement. Porous ceramic bodies having open cells within these ranges can exert a significant internal filtering effect to effectively collect relatively fine particulates and reduce the pressure loss as low as possible, thereby achieving a more effective exhaust gas treatment.

The porous ceramic bodies used in the present invention should also have a bulk specific gravity of 0.25 to 0.5. Ceramic bodies with a bulk specific gravity of less than 0.25 have a reduced strength and are not applicable to the automobile engine exhaust gas treatment. Porous ceramic bodies having a bulk specific gravity of more than 0.5 tend to be readily clogged, failing to achieve an effective treatment of exhaust gases. The most preferred porous ceramic bodies for collecting particulates have a bulk specific gravity in the range of 0.3 to 0.4.

The particulate collecting element used in the present invention may comprise a single porous ceramic body having the above-defined characteristics while it is preferred to use a plurality of porous ceramic bodies of a three-dimensional reticulate structure having interconnected open cells, with the porous ceramic bodies being connected in series such that a coarser body is located upstream of a denser body in the path of exhaust gases. Fig. 5 illustrates one example in which a coarser porous ceramic body 11a having a smaller number of interconnected open cells is located at an inlet I and a denser porous ceramic body 11b having a larger number of open cells is located at an outlet II of the element in the path of exhaust gases. The exhaust gases from an engine enter the coarser ceramic body 11a and then the denser ceramic body 11b while the gases flow through the interconnected open cells of the coarser ceramic body and then those of the denser ceramic body in a continuous manner.

While the two porous ceramic bodies 11a and 11b are combined into a stack in Fig. 5, at least one intermediate porous ceramic body 11c having an intermediate number of open cells may be interposed between the coarser and denser porous ceramic bodies 11a and 11b. Fig. 6 illustrates one example of the particulate collecting element including three porous ceramic bodies 11a, 11b and 11c. The open cells of the upstream body 11a are larger than the open cells of the intermediate body 11c and the open cells of the downstream body 11b are smaller than the open cells of the intermediate body 11c. In these stacked structure, preferably, the upstream porous ceramic body 11a located at the inlet I of the element in the path of exhaust gases has 6—50 open cells, more preferably 6—15 open cells per 2.54 cm while the downstream denser porous ceramic body 11b located at the outlet II has 20—150 open cells, more preferably 35—80 open cells per 2.54 cm. The particulate collecting element consisting of such series-connected porous ceramic bodies experiences minimized clogging and pressure loss thereacross and succeeds in effectively collecting relatively fine particulates of less than 1 micron. If the upstream coarser ceramic body 11a at the inlet I in the path of exhaust gases has less than 6 open cells per 2.54 cm, the number of the strands forming the reticulate structure of the ceramic body against which particles impinge is reduced to such an extent that particulate collection and catalytic oxidation become insufficient. If the number of open cells in the upstream ceramic body 11a exceeds 50 per 2.54 cm, the initial pressure loss and particulate collection at the inlet side become excessive, often resulting in a rapid increase in pressure loss. Furthermore, if the number of open cells in the downstream ceramic body 11b at the outlet II in the path of exhaust gases is less than 20 per 2.54 cm, fine particulates are not fully collected. The downstream ceramic body having more than 150 open cells per 2.54 cm experiences an increased pressure loss thereacross, leading to the reduced output of the engine.

It is to be noted that all the porous ceramic bodies 11a, 11b and 11c which form a stacked structure for the element should have a bulk specific gravity in the range of 0.25 to 0.5.

As described above, the particulate collecting element used according to the present invention comprises at least one porous ceramic body of a three-dimensional reticulate structure having a given number of interconnected open cells through which exhaust gases pass. The porous ceramic body may preferably be prepared by applying a ceramic slurry to a flexible polyurethane foam having a substantially skeletal reticulated structure and sintering the foam, thereby removing the polyurethane foam through carbonization to leave ceramic strands. By starting from a flexible reticulated polyurethane foam, a cage-like porous ceramic body is obtained which consists of the edges of a regular dodecahedron, the edges being designated as "strands" in this specification. The porous ceramic body of this type not only allows engine exhaust gases to flow therethrough with a reduced pressure loss because of its substantial porosity, but also can collect particulates in the exhaust gases through an internal filtering mechanism during the passage of the exhaust gases through the interconnected open cells of the ceramic body because of the complicatedness of the cells. The material of which the porous ceramic body is formed may preferably be cordierite because a sufficient strength to withstand the thermal shock caused by engine exhaust gases is obtained.

In a preferred embodiment of the present invention, the strands of the porous ceramic body may be coated with activated alumina and/or an oxidation catalyst at the surface. Preferably the activated alumina layer has an oxidation catalyst deposited or impregnated. When the collecting element consists of a stack of two or more porous ceramic bodies, particularly the coarser porous ceramic body located at the upstream side in the exhaust gas flow is preferably coated with activated alumina and/or an oxidation catalyst. The porous ceramic body having strands coated with activated alumina or an oxidation catalyst can adsorb and collect particulates in oxidizable conditions. Although Diesel engine exhaust gases are at relatively low temperatures, removal of particulates can be achieved simply by passing the exhaust gases through the treated ceramic body. In addition, hydrocarbons and carbon monoxide which are undesired contaminants in the exhaust gases as well as particulates are also adsorbed and oxidized on the treated ceramic body. It is therefore very effective to coat the strands of the porous ceramic body with an oxidation catalyst or activated alumina having an oxidation catalyst impregnated.

The above-mentioned exhaust filter device of the present invention is located in the path of exhaust gases from an engine at a given position. The exhaust gases from the engine enter the porous ceramic body where the gases flow through the interconnected open cells thereof. During this passage, particulates of soot, benzopyrene and the like in the exhaust gases collect on the strands of the porous ceramic body. Since the element for collecting particulates in engine exhaust gases used according to the present invention comprises a porous ceramic body of a three-dimensional reticulate structure having 6—150 interconnected open cells per 2.54 cm and having a bulk specific gravity of 0.25—0.5 and is located in the path of engine exhaust gases, the exhaust gases flow through the interconnected open cells while repeatedly impinging against the strands of the porous ceramic body and as a result, particulates in the exhaust gases adhere and are collected on the strands upon impingement. Because of collection through such an internal filtering mechanism, particulates in engine exhaust gases, particularly very fine particulates on the order of 0.2 micron in diameter as contained in Diesel engine exhaust gases can be effectively collected. Additionally, the filter device of the present invention can not only retain a large amount of particulates, but also maintain its collecting capacity for a prolonged period of time. The device has a long effective life on an automobile so that only occasional exchange is necessary. Since the particulate collecting element used according to the present invention maintains its particulate collecting capacity for a long period of time in a stable manner with a reduced pressure loss and without clogging to ensure effective collection of particulates, and has improved resistance to heat, thermal shock and corrosion and sufficient strength, the filter device is best suited for the collection of particulates from exhaust gases of engines, particularly Diesel engines. Because of a three-dimensional reticulate structure consisting of interconnected strands to which particulates are adsorbed or adhered, the element has a relatively large surface area which allows particulates to be oxidized at a relatively low temperature. Accordingly, the collected particulates can be readily oxidized and removed or burnt off even when the element is mounted at a substantial distance from the outlet of the engine.

In the preferred embodiment where a plurality of porous ceramic bodies having different numbers of open cells are series connected with the coarser body being located upstream and the denser body being located downstream in the path of exhaust gases, relatively coarse particulates are collected in the coarser porous ceramic body and relatively fine particulates are collected in the denser porous ceramic body. Since the denser porous ceramic body having a larger number of open cells collects a minimum amount of relatively coarse particulates, clogging seldom occurs and the pressure loss increase is retarded. This embodiment eliminates the disadvantage of reducing the engine performance and increasing the fuel consumption. The best results are obtained when the upstream porous ceramic body has 6—15 cells per 2.54 cm and the downstream porous ceramic body has 35—80 open cells per 2.54 cm.

As a substitute for a stack of porous ceramic bodies having different numbers of open cells, an integral porous ceramic body in which the number of open cells per unit length continuously increases from the inlet to the outlet of the body may be envisaged. Such a porosity varying porous ceramic body, however, is likely to fail under frequent thermal cycling occurring when used with Diesel engine exhaust gases, because a substantial difference of heating or cooling rate occurs between the coarser portion and the denser portion under thermal cycling to induce a thermal stress within the body. Such an inconvenient phenomenon will not occur in a stack of a plurality of series-connected porous ceramic bodies because each body is uniform in porosity.

The particulate collecting element used in the present invention is mounted in a suitable housing adapted to be easily connected in the path of exhaust gases from an engine. If the porous ceramic body is directly set in the housing the incoming exhaust gases will leak out of the side surface of the porous ceramic body. Such bypassing of the exhaust gases results in insufficient filtration of particulates. To avoid such bypassing, the outer surface of the porous ceramic body, particularly the body having a form as shown in Fig. 2 or Fig. 3 is sealed. The structure of the exhaust filter device in the sealed porous ceramic body is shown in Fig. 7.

The embodiment of the invention is shown in Fig. 7 wherein a cover 19 of carbon fibers or woven or non-woven fabric thereof encircles a porous ceramic body 11, a flexible ceramic sheet 13 containing a component expandable upon heating encircles the cover 19 to a thickness of 1—20 mm, and a housing 16 receives the assembly of the porous ceramic sheet, the cover and the ceramic sheet. The assembly is placed in the housing 16 so as to compress the ceramic sheet 13 at 5—50% deflection, and the assembly is heated to allow the ceramic sheet 13 to expand, whereby the porous ceramic body 11 is tightly retained within the housing 16. This canning structure can seal the porous ceramic body 11 more positively while absorbing errors in dimensions of the porous ceramic body 11. This canning structure contributes to further improvements in vibration damping and thermal shock resistance.

The housing 16 having the assembly fitted therein is connected between inlet and outlet pipes 17 and 18. The exhaust gases from the inlet pipe 17 enter the porous ceramic body 11 through the inlet 14 where the gases flow through the interconnected open cells and then emerge from the outlet 15 into the outlet pipe 18. Since this canning structure is obtained by winding the flexible ceramic sheet 13 containing a component expandable upon heating around the porous ceramic body 11 to a thickness of 1—20 mm, inserting the assembly into the housing 16 so as to compress the ceramic sheet 13 at 5—50% deflection, and heating the assembly to allow the ceramic sheet 13 to expand, thereby tightly retaining the porous ceramic body 11 within the housing 16, errors in dimensions of the porous ceramic body 11 which would occur during manufacture are absorbed and the porous ceramic body 11 is sealed in an air-tight manner. The canning structure prevents the exhaust gases from leaking out of the porous ceramic body at the side surface to bypass the body. In addition, the tight and firm fit of the porous ceramic body in the housing 16 is advantageous when connected in a vibratory exhaust pipe as in the case of automobiles because the porous ceramic body would otherwise be loosened. In addition, the ceramic sheet 13 has an additional function of effectively absorbing such vibration as it has flexible and cushioning properties. The canning structure exhibits improved resistance to thermal shock. Even when thermal shock results from the passage of high-temperature exhaust gases, slip motion is allowed between the porous ceramic body 11 and the ceramic sheet 13 to prevent a thermal stress from developing therebetween.

The assembly can be tightly canned in the housing with ease. This canning structure may advantageously be used for the collection of particulates in Diesel engine exhaust gases or clearing of high-temperature exhaust gases because it is highly resistant to vibration and thermal shock and unsusceptible to failure under stress by a high-temperature high-velocity fluid, and maintains its stable sealing effect over a long period of time. Particularly, the failure by a high-temperature high-velocity fluid or exhaust gases will be further described. Since the porous ceramic body is of a three-dimensional reticulate structure, the exhaust gases passing through the body also come in contact with the sealing member. When the high-temperature exhaust gases flow at a high velocity, common inorganic fibers which are relatively fragile would be easily broken through the application of a stress on the fibers. Such broken fiber chips are carried away with the flow of exhaust gases. As a result, the sealing member gradually abrades to a thickness insufficient to fulfill the sealing function. However, carbon fibers and woven and non-woven fabrics thereof, from which the cover 19 is formed, can sufficiently withstand the stress and thermal shock caused by a high-temperature high velocity fluid flow through the interconnected open cells of the porous ceramic body 11 to contact the cover 19. The cover 19 of carbon fibers is free of failure or abrasion and seals the ceramic porous body 11 for a long period of time in a stable manner.

The flexible extendible ceramic sheet 13 which is used according to the present invention may be prepared by shaping ceramic fibers in admixture with expandable mica or vermiculite into a sheet as described in Japanese Patent Application Laid-Open Nos. 50—55603, 51—69507 and 54—30218. The preferred ceramic sheet is manufactured and sold by the Minnesota Mining & Manufacturing Company (USA) under the trade designation INTER-RAM.

The preferred carbon fibers are prepared by carbonizing polyacrylonitrile fibers. The preferred fiber is manufactured and sold by Toho Rayon Co., Ltd. (Japan) under the trade designation PYROMEX or CELIOX.

It will be readily anticipated by those skilled in the art that although the embodiment of Fig. 7 uses a single porous ceramic body, a stack of porous ceramic bodies as shown in Figs. 5 and 6 may be substituted for the single porous ceramic body in these embodiments.

Examples of the present invention are described below by way of illustration and not by way of limitation.

In all of the examples, the porous ceramic bodies were prepared by applying a ceramic slurry to a flexible reticulated polyurethane foam and sintering the foam coated with the ceramic slurry to remove the polyurethane foam through carbonization and to leave ceramic strands. The material of the ceramic were cordierite.

### Example 1

A cylindrical element having a diameter of 12.7 cm and a length of 15.24 cm as shown in Fig. 2 was formed of a porous ceramic body containing 35 interconnected open cells per inch and having a bulk specific gravity of 0.35, and sealed at the circumferential surface. The element was attached downstream of an exhaust manifold connected to a 3.6-liter, 6-cylinder indirect injection engine, which was operated at 2,000 min$^{-1}$ and a torque of 108 Nm. The initial pressure loss was 10.7 mbar and the pressure loss increased to 93.3 mbar after two hour operation. The particulate collection averaged 76% throughout the operation.

### Example 2

A cylindrical element having a diameter of 10.16 cm and a length of 15.24 cm as shown in Fig. 2 was formed of a porous ceramic body containing 13 interconnected open cells per 2.54 cm, having a bulk specific gravity of 0.4 and coated with 10% alpha-alumina, and sealed at the circumferential surface. The element was attached downstream of an exhaust manifold connected to a 1.8 liter, 4-cylinder indirect injection engine, which was operated at 2,000 min$^{-1}$ and a torque of 78.5 Nm. The initial pressure loss was less than 1.33 mbar, and the pressure loss increased to 46.6 mbar after six hour operation. The percentage of particulates collected was determined at intervals of one hour and the average was 42%. To regenerate the element, hot air at a temperature of 650°C was blown for three minutes through the element which had collected particulates. When the regenerated element was used again in the same conditions, the initial pressure loss was less than 1.33 mbar.

### Claims

1. An exhaust filter device for collecting particulates in exhaust gases from an engine, comprising a housing (16) enclosing an element (10) for collecting said particulates, said element (10) being tightly retained in said housing (16), characterized in that it comprises at least one porous ceramic body (11) of a three-dimensional reticulate structure having 6—150 interconnected open cells per 2.54 cm and having a bulk specific gravity of 0.25—0.5 and is tightly encircled by

a) a flexible ceramic sheet (13), leaving openings (14, 15) at the opposed ends of said body (11) to form an inlet and an outlet for the passage of exhaust gases, said ceramic sheet (13) containing a component expandable upon heating and being compressed at 5—50% deflection by said housing (16), and

b) a cover (19), leaving openings (14, 15) at the opposed ends of said body (11) to form an inlet and an outlet for the passage of exhaust gases, said cover (19) being formed from at least one member selected from heat resistant long carbon fibers and woven and non-woven fabrics thereof.

2. The exhaust filter device according to claim 1, characterized by comprising at least two series-connected porous ceramic bodies (11a, 11b) of a three-dimensional reticulate structure (11) having 6—150 interconnected open cells per 2.54 cm and having a bulk specific gravity of 0.25—0.5, the coarser ceramic body (11a) having a smaller number of open cells being located upstream of the denser ceramic body (11b) having a larger number of open cells in the path of exhaust gases whereby the exhaust gases flow through said coarser ceramic body (11a) and then said denser ceramic body (11b).

3. The exhaust filter device according to claims 1 or 2, characterized in that said coarser porous ceramic body (11a) located at the inlet side of the element comprises a porous ceramic body having 6—50 interconnected open cells per 2.54 cm and said denser porous ceramic body (11b) located at the outlet side comprises a porous ceramic body having 20—150 interconnected open cells per 2.54 cm.

4. The exhaust filter device according to claims 1 or 2, characterized in that said strands which form the reticulate structure of the porous ceramic body are coated with an activated alumina layer.

5. The exhaust filter device according to claim 4, characterized in that the activated alumina layer has an oxidation catalyst deposited or impregnated.

6. The exhaust filter device according to claims 1 or 2, characterized in that the strands which form the reticulate structure of the porous ceramic body are coated with an oxidation catalyst.

7. The exhaust filter device according to claim 1, characterized in that said ceramic sheet (13) is prepared by shaping ceramic fibers in admixture with expandable mica or vermiculite into a sheet and heating the assembly of the ceramic sheet (13), said porous body (11) and said housing compressing said ceramic sheet at 5—50% deflection to allow said ceramic sheet to expand.

8. The exhaust filter device according to claim 1, characterized in that said carbon fibers are prepared by carbonizing polyacrylonitrile fibers.

9. The exhaust filter device according to claims 1 to 8, characterized in that said ceramic body (10) comprises 9—80 interconnected open cells per 2.54 cm.

**Patentansprüche**

Abgasfiltereinrichtung zur Abtrennung von Teilchen aus den Abgasen eines Motors mit einem Gehäuse (16), welches ein Element (10) zur Sammlung der Teilchen einschließt, welches Element (10) fest in dem Gehäuse (16) eingeschlossen ist, dadurch gekennzeichnet, daß sie mindestens einen porösen Keramikkörper (11) mit einer dreidimensional vernetzten Struktur, die 6 bis 150 miteinander verbundene offene Zellen pro 2,54 cm und eine Dichte von 0,25 bis 0,5 aufweist und fest umgeben ist von

a) einem flexiblen Keramikblatt (13), welches an den einander gegenüberliegenden Enden des Körpers (11) Öffnungen (14, 15) offenläßt unter Bildung eines Einlasses und eines Auslasses für die hindurchtretenden Abgase, welches Keramikblatt (13) einen sich beim Erhitzen ausdehnenden Bestandteil enthält und durch das Gehäuse (16) mit einer Verformung von 5 bis 50% zusammengepreßt wird, und

b) einer Abdeckung (19), welche an den einander gegenüberliegenden Enden des Körpers (11) Öffnungen (14, 15) offenläßt unter Bildung eines Einlasses und eines Auslasses für die hindurchtretenden Abgase, welche Abdeckung (19) aus mindestens einem Vertreter der hitzebeständige lange Kohlenstoffasern, Gewerbe und Vliesstoffe daraus umfassenden Gruppe, gebildet ist.

2. Abgasfiltereinrichtung nach Anspruch 1, dadurch gekennzeichnet, daß sie mindestens zwei in Reihe geschaltete, poröse Keramikkörper (11a, 11b) mit einer dreidimensional vernetzten Struktur (11) mit 6 bis 150 miteinander verbundenen offenen Zellen pro 2,54 cm und einer Dichte von 0,25 bis 0,5 umfaßt, wobei der gröbere Keramikkörper (11a), der eine kleinere Anzahl offener Zellen aufweist, stromaufwärts in bezug auf den dichteren Keramikkörper (11b), der eine größere Anzahl offener Zellen aufweist, in dem Weg der Abgase angeordnet ist, so daß die Abgase zunächst durch den gröberen Keramikkörper (11a) und dann durch den dichteren Keramikkörper (11b) strömen.

3. Abgasfiltereinrichtung nach den Ansprüchen 1 oder 2, dadurch gekennzeichnet, daß der gröbere Keramikkörper (11a), der an der Einlaßseite des Elements angeordnet ist, einen porösen Keramikkörper mit 6 bis 50 miteinander verbundenen offenen Zellen pro 2,54 cm umfaßt und der dichtere poröse Keramikkörper (11b), der an der Auslaßseite angeordnet ist, einen Keramikkörper mit 20 bis 150 miteinander verbundenen offenen Zellen pro 2,54 cm aufweist.

4. Abgasfiltereinrichtung nach den Ansprüchen 1 oder 2, dadurch gekennzeichnet, daß die die vernetzte Struktur des porösen Keramikkörpers bildenden Stränge mit einer Schicht aus aktiviertem Aluminiumoxid beschichtet sind.

5. Abgasfiltereinrichtung nach Anspruch 4, dadurch gekennzeichnet, daß auf der Schicht aus aktiviertem Aluminiumoxid ein Oxidationskatalysator abgeschieden ist oder diese Schicht imprägniert.

6. Abgasfiltereinrichtung nach den Ansprüchen 1 oder 2, dadurch gekennzeichnet, daß die die vernetzte Struktur des porösen Keramikkörpers bildenden Stränge mit einem Oxidationskatalysator beschichtet sind.

7. Abgasfiltereinrichtung nach Anspruch 1, dadurch gekennzeichnet, daß das Keramikblatt (13) durch Verformen einer Mischung aus Meramikfasern und ausdehnbarem Glimmer oder Vermiculit zu einem Blatt und Erhitzen eines Verbundgefüges aus dem Keramikblatt (13), dem porösen Körper (11) und dem das Keramikblatt mit einer Verformung von 5 bis 50% zusammenpressenden Gehäuse unter Expandieren des Keramikblatts hergestellt wird.

8. Abgasfiltereinrichtung nach Anspruch 1, dadurch gekennzeichnet, daß die Kohlenstoffasern durch Carbonisieren von Polyacrylnitrilfasern hergestellt werden.

9. Abgasfiltereinrichtung nach den Ansprüchen 1 bis 8, dadurch gekennzeichnet, daß der Keramikkörper (10) 9 bis 80 miteinander verbundene offene Zellen pro 2,54 cm aufweist.

## Revendications

1. Dispositif filtrant pour échappement, destiné à recueillir des particules situées dans des gaz d'échappement provenant d'un moteur, comprenant un boîtier (16) enfermant un élément (10) destiné à recueillir lesdites particules, ledit élément (10) étant retenu de manière étanche dans ledit boîtier (16), caractérisé en ce qu'il comprend au moins un corps céramique poreux (11) d'une structure réticulaire tridimensionnelle présentant 6—150 cellules ouvertes reliées entre elles pour 2,54 cm et présentant un poids volumique apparent de 0,25—0,5, et il est ceinturé de manière étanche par:

a) une feuille céramique flexible (13), laissant subsister des ouvertures (14, 15) aux extrémités opposées dudit corps (11) afin de former une entrée et une sortie pour le passage des gaz d'échappement, ladite feuille céramique (13) contenant un constituant dilatable au chauffage et étant comprimée à 5—50% de fléchissement par ledit boîtier (16), et

b) une enveloppe (19), laissant subsister des ouvertures (14, 15) aux extrémités opposées dudit corps (11) afin de former une entrée et une sortie pour le passage des gaz d'échappement, ladite enveloppe (19) étant constituée d'au moins un élément choisi parmi les fibres de carbone longues et réfractaires et des étoffes tissées et nappées formées de ces dernières.

2. Dispositif filtrant pour échappement selon la revendication 1, caractérisé en ce qu'il comprend au moins deux corps céramiques poreux reliés en série (11a, 11b) ayant une structure réticulaire tridimensionnelle (11) présentant 6—150 cellules ouvertes reliées entre elles pour 2,54 cm et présentant un poids volumique apparent de 0,25—0,5, le corps céramique le plus grossier qui présente un nombre plus faible de cellules ouvertes étant disposé en amont, dans le trajet des gaz d'échappement, par rapport au corps céramique le plus dense (11b) qui présente un nombre plus grand de cellules ouvertes, de sorte que les gaz d'échappement s'écoulent à travers ledit corps céramique plus grossier (11a), puis ledit corps céramique plus dense (11b).

3. Dispositif filtrant pour échappement selon les revendications 1 ou 2, caractérisé en ce que ledit corps céramique poreux plus grossier (11a) disposé du côté entrée de l'élément comprend un corps céramique poreux présentant 6—50 cellules ouvertures reliées entre elles pour 2,54 cm et ledit corps céramique poreux plus dense (11b) disposé sur le côté sortie comprend un corps céramique poreux présentant 20—150 cellules ouvertes reliées entre elles pour 2,54 cm.

4. Dispositif filtrant pour échappement selon les revendications 1 ou 2, caractérisé en ce que lesdits filaments qui forment la structure réticulée du corps céramique poreux sont revêtus d'une couche d'alumine activée.

5. Dispositif filtrant pour échappement selon la revendication 4, caractérisé en ce que la couche d'alumine activée présente un catalyseur d'oxydation déposé ou imprégné.

6. Dispositif filtrant pour échappement selon les revendications 1 ou 2, caractérisé en ce que les filaments qui forment la structure réticulée du corps céramique poreux sont revêtus à l'aide d'un catalyseur d'oxydation.

7. Dispositif filtrant pour échappement selon la revendication 1, caractérisé en ce que ladite feuille céramique (13) est préparée en conformant des fibres céramiques en mélange avec du mica ou de la vermiculite dilatables sous la forme d'une feuille et en chauffant l'ensemble de la feuille céramique (13), dudit corps poreux (11) et dudit boîtier comprimant ladite feuille céramique sous 5—50% de fléchissement, de manière à permettre à ladite feuille céramique de se dilater.

8. Dispositif filtrant pour échappement selon la revendication 1, caractérisé en ce que lesdites fibres de carbone sont préparées en carbonisant des fibres de polyacrylonitrile.

9. Dispositif filtrant pour échappement selon les revendications 1 à 8, caractérisé en ce que ledit corps céramique (10) comprend 9—80 cellules ouvertes reliées entre elles pour 2,54 cm.

# FIG. I

# FIG.2

# FIG.4

# FIG.3

1

# FIG.5

# FIG.6

# FIG.7